Europäisches Patentamt

(19) European Patent Office

Office européen des brevets

(11) Publication number: **0 291 104**
**B1**

(12) **EUROPEAN PATENT SPECIFICATION**

(45) Date of publication of the patent specification:
09.05.90

(51) Int. Cl.⁵: **B60K 17/24, F16C 33/76**

(21) Application number: **88200433.6**

(22) Date of filing: **08.03.88**

(54) Seal gasket with bearing for vehicles propeller shafts.

(30) Priority: **11.05.87 IT 5329987 U**

(43) Date of publication of application:
**17.11.88 Bulletin 88/46**

(45) Publication of the grant of the patent:
**09.05.90 Bulletin 90/19**

(84) Designated Contracting States:
**DE FR GB SE**

(56) References cited:
**WO-A-80/01939**
**DE-A- 1 944 919**
**US-A- 1 387 993**
**US-A- 2 092 291**
**US-A- 2 165 155**
**US-A- 3 619 017**

(73) Proprietor: **RIV-SKF OFFICINE DI VILLAR PEROSA S.p.A, Via Mazzini 53, I-10123 Torino(IT)**

(72) Inventor: **Coianzi, Franco, Piazza Rivoli, 7, I-10100 Torino(IT)**

(74) Representative: **Lotti, Giorgio, c/o Ing. Barzanò & Zanardo Milano S.p.A. Via Cernaia 20, I-10122 Torino(IT)**

## Description

The invention refers to a seal gasket with bearing for vehicles propeller shaft. The drive shafts of the vehicles, especially those outcoming a from the differential, hold an elastic case which has the task of avoiding oil leakages towards the outside and the penetration of external agents like dust, dirt and mud among the mechanical elements to which the drive shaft is connected.

Such case at one end is attached to an immovable point and at the other end is wound on a ground section of the shaft with an interposed seal gasket.

Usually, between the gasket and the case there is also a bushing which is extending on the shaft in the inner part of the case.

During motion, the shaft is usually subject to various type of movements – oscillating and horizontal traveling – so that the bushing and the gasket continuously slide on the ground section on which they are assembled, which get fouled by external agents. Frictions which cause progressive wearing of such reciprocally sliding elements are thus created, first of all of the gasket, originating oil leakages towards the outside and the ingoing of external agents over the case.

A realization for the overcoming of such inconveniences foresees the assembly of the gasket between the inner race and the outer race of a bearing and the latter on a bushing keyed on the shaft. This unit therefore remains stationary on the enlarged and ground section of the shaft during its oscillation and horizontal travelings, with consequent adaptation to them by the case; this solution therefore requires the utilization of another element – the bushing with subsequent high precision machining operations on the reciprocally assembled elements.

In any case, between the inner race of the bearing and the bushing, some oil leakages may take place during operation and following the wear of such elements.

From document DE-A 1 944 919 it is known a seal gasket with bearing for propeller shafts of vehicles of the type in which a rolling bearing is associated with the sealing gasket and both of them are interposed between the case and the shaft, wherein the inner race of the bearing is keyed directly on an enlarged section of the shaft and the sealing gasket is associated with the bearing in such a manner as to be prevented from sliding axially.

In this case too, however between the inner rece of the bearing and the shaft, some oil leakages may take place during operation and following the wear of such elements.

Purpose of the invention is to propose a device which allows to cancel the above mentioned problem caused by the wear of the reciprocally sliding elements; the invention, in fact, proposes a device where both the seal gasket and the bearing are immovably assembled abreast on the shaft, without the interposition of further elements thus making the manufacture of the unit simpler and avoiding the risk of oil a leakages and the necessity to effect complex and expensive machinings on the various elements of the unit.

For these and other purposes which will be better appreciated as the description follows, the invention proposes to realize a seal gasket with bearing for vehicles shaft of the type in which a rolling bearing is associated with a sealing gasket and both of them are interposed between the case and the shaft, wherein the inner race of the bearing is keyed directly on the enlarged section of the shaft and the seal gasket is associated with the bearing so as to be prevented from sliding axially, characterized in that the seal gasket as well, is mounted directly on the shaft.

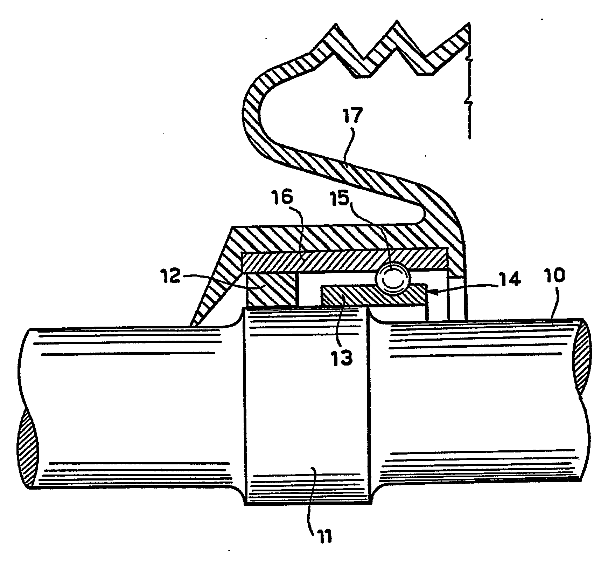

The description of the invention will now follow, and reference will be made to the enclosed drawing showing the axial section view of the shaft where the device according to the invention is foreseen.

According to the invention the shaft 10 has a short enlarged and ground section 11, on which the gasket 12 and the inner race 13 of a bearing are directly assembled. According to a preferred embodiment of the invention the race 13 is assembled on the shaft 10 so that the balls 15 are offset with respect to the enlarged section 11, whilst the outer race 16 is inserted in a plane section of the case 17 and is extending on the external surface of the gasket 12, being this interposed between the case 17 and the gasket 12.

The gasket 12, by this device, is axially fixed to the shaft 11 so that it is not compelled to move on dirty surfaces, wearing out and originating oil leakages.

Furthermore, there is no danger of oil leakages between the inner race 13 and the shaft 11 on which the race 13 is directly keyed.

Neither the gasket 12, nor the bearing 14 are subject to axial slidings, then the ground surface 11 of the shaft is reduced to a minimum.

It must be noticed that in the preferred embodiment of the invention a wider tolerance is allowed on the diameter of the shaft 11, as the balls 15 are "offset".

Finally, the gasket 12 "runs" on a non-eccentric counterface and therefore there is no risk of early wearing.

## Claims

1. Seal gasket with bearing for propeller shafts of vehicles of the type in which a rolling bearing (14) is associated with the sealing gasket (12) and both of them are interposed between the case (17) and the shaft (10), wherein the inner race (13) of the bearing (14) is keyed directly on the enlarged section (11) of the shaft and the sealing gasket (12) is associated with the bearing (14) in such a manner as to be prevented from sliding axially, characterized in that the seal gasket (12), is mounted directly on the shaft (11).

2. Seal gasket according to claim 1 characterized in that the inner race (13) of the bearing (14) is assembled on the enlarged section (11) of the shaft (10) in such a manner that its balls (15) are offset with respect to the enlarged section (11).

3. Seal gasket according to claim 1 characterized in that the outer race (16) of the bearing (14) extends to a position between the case (17) and the gasket (12).

**Patentansprüche**

1. Dichtung mit Lager für Antriebswellen von Fahrzeugen wobei ein Wälzlager (14) mit der Dichtung (12) verbunden ist und beide zwischen dem Kasten (17) und der Welle (10) liegen und in der der Innenring (13) des Lagers (14) direct auf dem vergrösserten Teil (11) der Welle verkeilt ist und die Dichtung (12) mit der Lager (14) verbunden ist, so dass ihr Axialgleiten behindert ist, dadurch gekennzeichnet, dass die Dichtung (12) direkt auf der Welle (11) montiert ist.

2. Dichtung nach Anspruch 1 dadurch gekennzeichnet, dass der Innenring (13) des Lagers (14) auf dem vergrösserten Teil (11) der Welle (10) montiert ist, so dass seine Kugeln (15) überhängend gegenüber dem vergrösserten Teil (11) angeordnet sind.

3. Dichtung nach Anspruch 1 dadurch gekennzeichnet, dass der Aussenring (16) des Lagers (14) sich erstreckt, so dass er sich zwischen dem Kasten (17) und der Dichtung (12) liegt.

**Revendications**

1. Joint d'étanchéité avec roulement pour arbres de transmission de véhicules du type où un roulement à billes (14) est associé au joint d'étanchéité (12) et tous les deux sont interposés entre le protecteur (17) et l'arbre (10) où la bague intérieure (13) du roulement (14) est calée directement sur la section grossie (11) de l'arbre et le joint d'étanchéité (12) est associé au roulement (14) de façon qu'il ne puisse pas glisser axialement, caractérisé du fait que le joint d'étanchéité (12) est monté directement sur l'arbre (11).

2. Joint d'étanchéité suivant la revendication 1, caractérisé du fait que la bague intérieure (13) du roulement (14) est montée sur la section grossie (11) de l'arbre (10) de façon que ses billes (15) soient disposées en saillie par rapport à la section grossie (11).

3. Joint d'étanchéité suivant la revendication 1, caractérisé du fait que la bague extérieure (16) du roulement (14) s'étend jusqu'à s'interposer entre le protecteur (17) et le joint d'étanchéité (12).